Europäisches Patentamt

European Patent Office

Office européen des brevets

(11) Publication number: **0 262 561**
**A2**

# EUROPEAN PATENT APPLICATION

(21) Application number: 87113840.0

(22) Date of filing: 22.09.87

(51) Int. Cl.⁴: **F23G 7/06**

(30) Priority: 29.09.86 JP 230837/86

(43) Date of publication of application:
06.04.88 Bulletin 88/14

(84) Designated Contracting States:
**DE FR GB**

(71) Applicant: **Mitsubishi Jushi Engineering Co., Ltd.**
**2480, Shindo**
**Hiratsuka-shi Kanagawa-ken(JP)**

(72) Inventor: **Deai, Kazuo**
**Mitsubishi Jushi Engineering Co.Lt. 2480, Shindo**
**Hiratsuka-shi Kanagawa-ken(JP)**
Inventor: **Yamazaki, Norio**
**Mitsubishi Jushi Engineering Co.Lt. 2480, Shindo**
**Hiratsuka-shi Kanagawa-ken(JP)**

(74) Representative: **Wächtershäuser, Günter, Dr.**
**Tal 29**
**D-8000 München 2(DE)**

(54) Method of burning waste gases from semiconductor-manufacturing processes and an apparatus for burning the waste gases.

(57) Waste gases containing noxious components discharged from semiconductor-manufacturing processes are flowed through the inner tube of the burner of a burning apparatus, a secondary fuel gas is fed into a space formed between the inner tube and an outer tube of the burner, and air or oxygen-rich air is supplied to the burning apparatus, whereby the noxious components are burnt at a position apart from the free end of the burner.

EP 0 262 561 A2

# METHOD OF BURNING WASTE GASES FROM SEMICONDUCTOR-MANUFACTURING PROCESSES AND AN APPARATUS FOR BURNING THE WASTE GASES

The present invention relates to a method of burning waste gases discharged from semiconductor-manufacturing processes and an apparatus for burning such waste gases. More particularly it relates to a method of burning waste gases discharged from semiconductor-mamufacturing processes, whereby combustible noxious components in the waste gases can be effectively removed in a stable manner in spite of variation of noxious components, their concentrations and flow rates when the apparatus is used, while deposition of oxides on the free end of a burner resulted by the burning is avoidable.

Various noxious components such as monosilane, phosphine, diborane, ammonia are discharged from various processes, for instance, a low pressure chemical vapor deposition, a plasma enhanced chemical vapor deposition and so on, to manufacture semiconductors.

Heretofore, such noxious components have been burnt by using a burning apparatus. However, there were sometimes difficulties to keep stable burning of waste gases due to the change of operating conditions for manufacturing the semiconductors. In such case, the noxious components have not been able to be effectively removed by burning them.

Further, in the conventional burning apparatus, it is experienced that oxides produced at the free end of a burner easily deposit with the result that the opening of the burner is clogged, and the noxious components can not be removed in a stable manner by burning them.

Therefore, there has been a demand for a method capable of effectively removing the noxious components discharged from a semiconductor-manufacturing processes in a stable manner in spite of variation of noxious components, their concentrations and flow rates for manufacturing the semiconductors and of preventing oxides produced during the burning of the components from deposition at the free end of the burner of the burning apparatus.

The foregoing and the other objects of the present invention have been attained by providing a method of burning waste gases from semiconductor-manufacturing processes to remove combustible noxious components in the waste gases which comprises flowing the waste gases through an inner tube of a burner which extends upwardly or downwardly and which is provided with an outer tube, and at the same time, flowing a secondary fuel gas through the gap between the outer and inner tubes, and air or oxygen-rich air is fed around the burner to thereby burn the noxious components at a position apart from the opening of the burner. .

The present invention is further to provide an apparatus for burning waste gases from semiconductor-manufacturing processes to remove noxious components which comprises a main body, a burner held by the main body so as to extend inside the main body vertically, the burner comprising an outer tube and an inner tube, a first pipe connected to the inner tube to feed the waste gases into the same, a second pipe connected to the space formed between the outer and inner tubes to feed a secondary fuel gas and a third pipe connected to the upper section of the main body to feed air or oxygen-rich air in the main body.

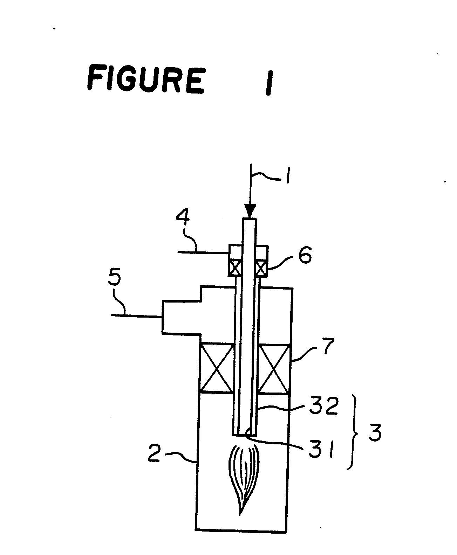

In the drawing, Figure 1 is a diagram showing an embodiment of an apparatus for burning waste gases which is used to carry out a method of burning the waste gases according to the present invention.

Method of burning the waste gases and an apparatus for carrying out the method according to the present invention will be described with reference to Figure 1.

In a diagram showing an embodiment of the burning apparatus for burning waste gases discharged from semiconductor-manufacturing processes, a reference numeral 2 designates a burning apparatus main body. A first pipe 1 as a waste gas feeding pipe to feed the waste gases discharged from the semiconductor-manufacturing processes is connected to the main body.

When a chemical vapor deposition processes are used for the semiconductor-manufacture, various noxious components such as inorganic hydrogen compounds (for instance, monosilane, phosphine, diborane) and ammonia are discharged. The waste gases are fed to an inner tube 31 of a burner 3 which is held by the main body 2 and extending virtically in the main body 2. The burner 3 comprises a outer tube 32 which is coaxially arranged with respect to the inner tube 31 so as to form a space gap between them. A second pipe 4 as a pipe for feeding a secondary fuel gas is connected to a chamber which is formed at the upper part of the main body 2 to feed the secondary fuel gas into a space formed between the outer and inner tubes 31, 32 so that the secondary fuel gas causes burning of the waste gases at a position apart from the free end of the burner by oxygen-isolating effect of the gas. Liquid propane gas may be used as a preferable secondary fuel gas.

A third pipe 5 for feeding air or oxygen-rich air which is necessary to cause the burning of the noxious components in the waste gases, is connected to the upper part of the main body s. Airflow unifying packings 7 are provided in the main body to define the upper section where the air or oxygen-rich air is fed and the lower section in which the free end of the burner 3 opens. The air flow unifying packings 7 are to unify an air flow from the third pipe 5 so that flame formed at the end of the burner is stabilized. Similarly, secondary fuel gas flow unifying packings 6 are provided in the chamber where the secondary fuel gas is supplied.

Gas velocities of the waste gases, the secondary fuel gas and the air or oxygen-rich air are adjusted to satisfy the following requirements.

(a) The flame caused by burning the combustible components in the waste gases is formed apart from the free end of the burner by the oxygen-isolating effect of the secondary fuel gas so as to avoid the deposition of oxides produced by burning the combustible components at the free end of the burner 3.

(b) An appropriate diameter, length and temperature of the flame are provided to sufficiently burn the noxious components in the waste gases.

(c) The oxides having particle sizes to be collected by dust collecting devices such as a venturi scrubber which is connected to the burning apparatus 2, are formed.

The conditions (a)-(c) can be satisfied by suitably designing the burning apparatus in either case that the flame is in the upward direction or in the downward direction.

In the method of the present invention, the secondary fuel gas is always burnt in the burning apparatus main body 2. Accordingly, a stable flame can be usually maintained even though the noxious components, their concentrations and flow rates may change, whereby a highly stable removing effect can be obtained. It shall be noticed that the secondary fuel gas requirement is little enough for a consideration of its costs as obvious in Example 1 described later. Further, the present invention permits such design that the waste gases discharged from plural units of same or different processes in a semiconductor-manufacture can be treated by a single burning apparatus.

EXAMPLE 1

100% monosilane gas was fed from the feeding pipe 1 to the burning apparatus 2 at a feeding rate of 600 cc/min., LPG was supplied through the secondary fuel gas supplying pipe 4 at a feeding rate of 300 cc/min., and air is supplied to the burning apparatus through the pipe 5, whereby the monosilane gas was burnt. The concentration of the monosilane gas at the outlet of the burning apparatus 2 was 0.5 ppm or lower which is a sufficient removing rate. There was found no deposition of a solid mass of silica at the free end of the burner 3 during the burning of the monosilane gas, and continuous operations was possible. The particles of silica were collected by the venturi scrubber connected to the burning apparatus 2. A high removing rate of 99% or higher could be obtained.

According to the present invention, the waste gases containing combustible noxious components such as inorganic hydrogen compounds, for instance, monosilane, phosphine, diborane, or ammonia can be burnt without causing deposition of oxides formed by burning at the free end of the burner of the burning apparatus by the oxygen-isolating effect of the secondary fuel gas. Further, in accordance with the present invention, a stable flame can be always maintained in spite of variation of noxious components, their concentrations and flow rates because the secondary fuel gas is always supplied and is burnt. Accordingly, the noxious components can be effectively removed by burning them in a stable manner in the semiconductor-manufacturing processes. Also, in accordance with the present invention, the noxious components can be certainly removed by forming the oxides having the particle sizes capable of collecting them by the dust collecting devices such as a venturi scrubber.

**Claims**

1. A method of burning waste gases from semiconductor-manufacturing processes to remove combustible noxious components in the waste gases which comprises flowing the waste gases through an inner tube of a burner which extends in the upward direction or in the downward direction and which is provided with an outer tube, and at the same time, flowing a secondary fuel gas through the gap between the outer and inner tubes, and air or oxygen-rich air is fed around the burner to thereby burn the noxious components at a position apart from the opening of the burner.

2. The method according to Claim 1, wherein said secondary fuel gas is liquid propane gas..

3. An apparatus for burning waste gases from semiconductor-manufacturing processes to remove noxious components which comprises a main body, a burner held by said main body so as to extend inside the main body vertically, said burner comprising an outer tube and an inner tube, a first pipe connected to said inner tube to feed said waste gases into the same, a second pipe connected to the space formed between said outer and inner tubes to feed a secondary fuel gas and a third pipe connected to the upper section of said main body to feed air or oxygen-rich air in said main body.

4. The apparatus according to Claim 3, wherein said secondary fuel gas is fed to the space between said outer and inner tubes through secondary fuel gas flow unifying packings.

5. The apparatus according to Claim 3, wherein air-flow unifying packings are provided in said main body to define the upper section where said air or oxygen-rich air is fed and the lower section in which said outer and inner tubes of the burner open, whereby a flame is formed apart from said opening of said burner.

6. The apparatus according to Claim 3, wherein said outer and inner tubes of said burner is co-axially arranged.

# FIGURE I